## Europäisches Patentamt
(19) **European Patent Office**
Office européen des brevets

(11) Publication number: **0 245 008**
**B1**

(12) # EUROPEAN PATENT SPECIFICATION

(45) Date of publication of the patent specification:
29.11.89

(51) Int. Cl.⁴: **B65G 53/40, B65G 53/46**

(21) Application number: **87303775.8**

(22) Date of filing: **28.04.87**

(54) A rotary valve for granular or particulate material.

(30) Priority: **01.05.86 GB 8610728**

(43) Date of publication of application:
**11.11.87 Bulletin 87/46**

(45) Publication of the grant of the patent:
**29.11.89 Bulletin 89/48**

(84) Designated Contracting States:
**DE FR NL**

(56) References cited:
**EP-A- 0 225 775**
**DE-A- 2 213 648**
**GB-A- 451 562**
**US-A- 3 052 383**
**US-A- 4 059 205**

(73) Proprietor: **WESTINGHOUSE BRAKE AND SIGNAL HOLDINGS LIMITED, Pew Hill, Chippenham Wiltshire(GB)**

(72) Inventor: **Bye, Leonard James, 3 Sadlers Mead, Chippenham Wiltshire(GB)**

(74) Representative: **Newstead, Michael John et al, Page & Co. Temple Gate House Temple Gate, Bristol BS1 6PL(GB)**

ACTORUM AG

## Description

This invention relates to a rotary valve for granular or particulate material.

DE-A 2 213 648 discloses a rotary valve having the pre-characterising features of claim 1.

According to the present invention there is provided a rotary valve for granular or particulate material, comprising:

a) a rotor which comprises a shaft mounted for rotation about its longitudinal axis, a plurality of vanes carried by said shaft around said axis and parallel thereto and a pair of discs carried by said shaft concentrically therewith at opposite ends of said vanes, which discs close at these ends the spaces between the vanes;

b) housing means in which said rotor rotates about said axis;

c) a pair of sealing rings concentric with the discs, each of which rings has a substantially trapezoidal section to provide a chamfered surface and is trapped between the housing means and an outer peripheral edge portion of a respective one of the discs, the outer peripheral edge portion of each of the discs being a chamfered edge which runs against the chamfered surface of the respective one of the sealing rings; and

d) means for urging each of said sealing rings towards the respective one of the discs, characterised in that:

e) said urging means comprises only, for each sealing ring, a respective ring of resilient material received between said housing means and the sealing ring.

The present invention will now be described, by way of example, with reference to the accompanying drawing, in which:

Figure 1 is a sectional view of part of a rotary valve according to an example of the invention;
Figure 2 shows part of a rotor of the valve; and
Figure 3 is a detail of what is shown in Figure 1.

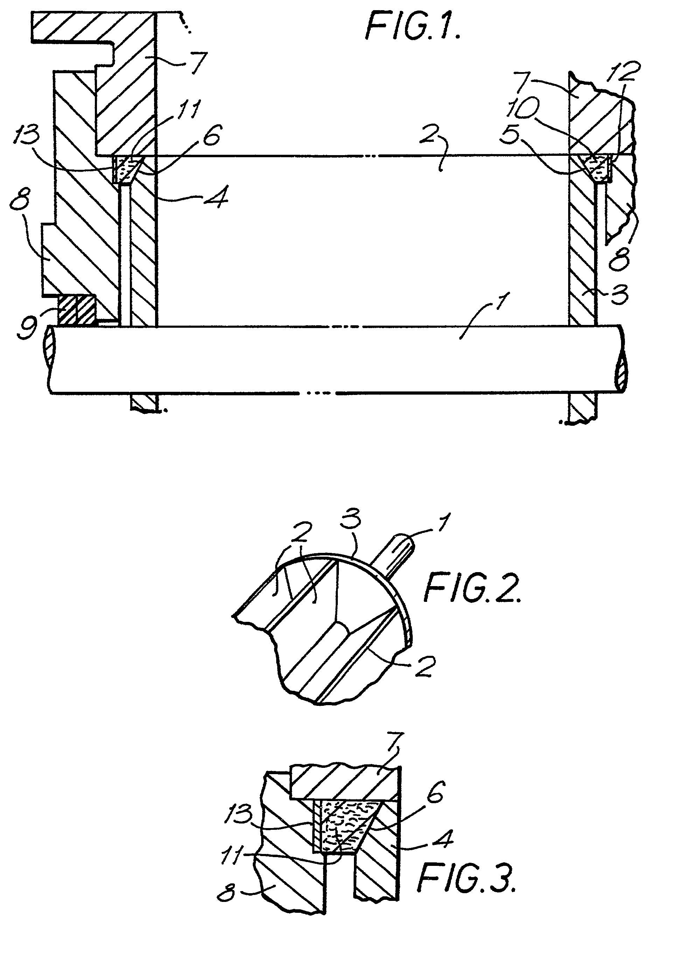

Referring to Figures 1, 2 and 3, a rotary valve for granular or particulate material comprises a rotor shaft 1 carrying a plurality of vanes 2 extending parallel to the shaft 1. At opposite ends, the vanes 2 are closed to the outside by discs 3 and 4 having chamfered peripheral outside edge portions 5 and 6. Reference numeral 7 denotes a body in which granular or particulate material is fed, such material being received in the pockets between adjacent vanes 2 as shaft 1 rotates and dispensed therefrom under gravity during such rotation for subsequent handling. Reference numeral 8 denotes a cover for the rotary valve, there being sealing means 9 between the rotor shaft 1 and the cover 8.

As the shaft 1 and its vanes 2 and discs 3 and 4 rotate in use of the valve, there is a risk that air travelling up the spaces between the discs 3 and 4 and the cover 8 and then between the body 7 and the discs 3 and 4 disturbs material in pockets between adjacent vanes 2 and possibly blows such material out of the pockets. To substantially avoid this, each of the discs 3 and 4 runs against a respective one of sealing rings 10 and 11, with its chamfered edge portion bearing against a corresponding chamfered surface on the respective sealing ring, each of sealing rings 10 and 11 having a trapezoidal section to provide its chamfered surface. Each of the rings 10 and 11 is of any suitable low friction material such as glass-loaded polytetrafluoroethylene, and is trapped between the outer peripheral edge portion of a respective one of the discs 3 and 4, the body 7 and the cover 8, there being resilient rings 12 and 13 of, for example, rubber between the cover 8 and the sealing rings 10 and 11 respectively for urging the latter towards the respective one of the discs 3 and 4. The angle that the chamfered surface of each of sealing rings 10 and 11 and the chamfered edge portion of each of discs 3 and 4 makes with a line at right angles to the axis of rotation of the discs is chosen to achieve optimum pressure balancing and could be in the range from 30° to 60°, for example 45°.

Each of the rings 10 and 11 could be held relative to the cover 8 by other means — for example by an abutment on the ring (or the cover) and a corresponding recess in the cover (or the ring).

## Claims

1. A rotary valve for granular or particulate material, comprising:

a) a rotor which comprises a shaft (1) mounted for rotation about its longitudinal axis, a plurality of vanes (2) carried by said shaft around said axis and parallel thereto and a pair of discs (3, 4) carried by said shaft concentrically therewith at opposite ends of said vanes, which discs close at these ends the spaces between the vanes;

b) housing means (7, 8) in which said rotor rotates about said axis;

c) a pair of sealing rings (10, 11) concentric with the discs, each of which rings has a substantially trapezoidal section to provide a chamfered surface and is trapped between the housing means and an outer peripheral edge portion (5 or 6) of a respective one of the discs, the outer peripheral edge portion of each of the discs being a chamfered edge which runs against the chamfered surface of the respective one of the sealing rings; and

d) means for urging each of said sealing rings towards the respective one of the discs, characterised in that:

e) said urging means comprises only, for each sealing ring, a respective ring (12 or 13) of resilient material received between said housing means and the sealing ring.

2. A valve according to Claim 1, characterised in that the chamfered surface of each of said sealing rings (10, 11) and the chamfered edge portion of the respective one of the discs (3, 4) make an angle in the range from 30° to 60° with a line at right angles to said axis.

3. A valve according to Claim 2, characterised in that said angle is 45°.

## Revendications

1. Une vanne rotative pour matériaux en granules ou en particules, comprenant:

a) un rotor comprenant un abre (1) monté en rotation autour de son axe longitudinal, une pluralité d'aubes (2) portée par l'arbre autour de cet axe et parallèle à celui-ci et une paire de disques (3, 4) portée par l'abre concentriquement à celui-ci aux extrémités opposées des aubes, les disques fermant les espaces entre les aubes à leur extrémité;

b) un carter (7, 8) dans lequel le rotor tourne autour de l'axe;

c) une paire de joints d'étanchéité (10, 11) concentriques aux disques, chacun de ces joints ayant une section sensiblement trapézoïdale pour délimiter une surface chanfreinée et étant coincée entre le carter et le bord périphérique (5 ou 6) de chacun des disques respectifs, les bords périphériques de chacun de ces disques consistant en un bord chanfreiné qui se déplace contre la surface chanfreinée de chacun des joints d'étanchéité respectifs; et

d) des moyens pour presser chacun des joints d'étanchéité contre leur disque respectif, caractérisé en ce que:

e) les moyens pour presser les joints comprennent seulement, pour chaque joint d'étanchéité, un joint respectif (12 ou 13) en matériau élastique placés entre le carter et le joint d'étanchéité.

2. Une vanne selon la revendication 1, caractérisée en ce que la surface chanfreinée de chacun des joints d'étanchéité (10, 11) et le bord chanfreiné de chacun des disques (3, 4) forment un angle compris entre 30° et 60° par rapport à une ligne faisant angles droits avec l'axe.

3. Une vanne selon la revendication 2, caractérisée en ce que cet angle est de 45°.

## Patentansprüche

1. Zellenradschleuse für körniges oder pulverförmiges Schüttgut, umfassend:

a) einen Rotor, umfassend eine Welle (1), die um ihre Längsachse drehbar gelagert ist, mehrere Flügel (2), die von dieser Welle um die besagte Achse herum und parallel zu dieser abgestützt sind, und zwei Scheiben (3, 4), die von dieser Welle konzentrisch hierzu an gegenüberliegenden Enden der besagten Flügel abgestützt sind, wobei diese Scheiben die Zwischenräume zwischen den Flügeln an den besagten Enden verschließen;

b) Gehäuseteile (7, 8), in denen sich der Rotor um die besagte Achse verdreht;

c) zwei Dichtungsringe (10, 11), die zu den Scheiben konzentrisch sind und die jeweils einen im wesentlichen trapezförmigen Querschnitt haben, um eine abgeschrägte Fläche zu bilden, und die zwischen den Gehäuseteilen und einem äußeren Umfangsrandbereich (5 oder 6) der betreffenden Scheibe festgelegt sind, wobei der äußere Umfangsrandbereich einer jeden Scheibe ein abgeschrägter Rand ist, der an der abgeschrägten Fläche des zugeordneten Dichtungsrings anliegt; und

d) Mittel zum Belasten eines jeden Dichtungsrings gegen die zugeordnete Scheibe, dadurch gekennzeichnet, daß

e) die Belastungsmittel für jeden Dichtungsring nur einen zugeordneten Ring (12 oder 13) aus elastischem Material umfassen, der zwischen den besagten Gehäuseteilen und dem Dichtungsring angeordnet ist.

2. Zellenradschleuse nach Anspruch 1, dadurch gekennzeichnet, daß die abgeschrägte Fläche eines jeden Dichtungsrings (10, 11) und der abgeschrägte Randbereich der zugeordneten Scheibe (3, 4) mit einer zu der besagten Achse rechtwinkligen Linie einen Winkel im Bereich von 30° bis 60° einschließen.

3. Zellenradschleuse nach Anspruch 2, dadurch gekennzeichnet, daß der besagte Winkel 45° beträgt.

*FIG.1.*

*FIG.2.*

*FIG.3.*